# EUROPEAN PATENT APPLICATION

(11) **EP 2 574 093 A1**
(43) Date of publication of application: **27.03.2013**
(21) Application number: 10852724.3
(22) Date of filing: 18.08.2010
(51) Int. Cl.: H04W 24/00

(54) **METHOD AND SYSTEM FOR MANAGING AND CONTROLLING WIRED TERMINAL, AND ACCESS SERVER**

(30) Priority: 11.06.2010 CN 201010198881
(71) Applicant: ZTE Corporation, Shenzhen, Guangdong 518057 (CN)
(72) Inventor: TANG, Guojun, Shenzhen Guangdong 518057 (CN); ZHAO, Changjun, Shenzhen Guangdong 518057 (CN)
(74) Representative: Jansen, Cornelis Marinus
(86) International application number: PCT/CN2010/076097
(87) International publication number: WO 2011/153731

(57) **Abstract**

The present application discloses a method and a system for managing and controlling a wired terminal, and an access server. The method includes: an access server is set to perform network address translation between an M2M wired terminal and an M2M platform, wherein the access server translates a public address using which the M2M wired terminal is registered with the M2M platform to an inner address, and allocates the inner address to the M2M wired terminal for continuous occupation; and the M2M platform performs management and control operation on the M2M wired terminal which occupies the inner address according to the registered public address of the M2M wired terminal, wherein the public address is translated to the inner address via the access server. The present application can be widely applied to the terminals of different characteristics, thus having a good compatibility.

## Description

### TECHNICAL FIELD

The present disclosure relates to the Machine-to-Machine (M2M) technique, and particularly to a method and a system for managing and controlling a wired terminal, and an access server.

### BACKGROUND

The Machine-to-Machine/Man, called M2M for short, is a network application and service which takes intelligent interaction between machine terminals as a core. The M2M provides customers with a comprehensive informational solution by embedding a wireless communication module into a machine and adopting an access way such as wireless communication, so as to meet the informational requirements of the customer concerning a plurality of aspects such as monitoring, conducting and dispatching, data collecting and measuring and so on.

As more and more attention is paid to the M2M, the mainstream operator has begun to launch a large scale deployment and application, and many manufacturers are developing application terminals supporting the M2M to meet the requirements of operation.

Although the M2M has considerable advantages, however, the industry span of the Internet is quite evident, thus one terminal only supporting part of the services may meet the requirements of its industry application. At this time, if the terminal is designed to support the entire M2M protocol, not only the terminal resource is wasted and the developing and manufacturing cost is increased, but also it seems unnecessary. As such, the designed terminal may have different features. For example, some terminals do not support the short-message access way due to the software cost control, while other terminals need to support relatively high instantaneity and to report a warning in a relatively shorter time. This causes a poor compatibility for operating the M2M platform.

### SUMMARY

The problem to be solved by the present disclosure is to provide a method and a system for managing and controlling a wired terminal, and an access server. The present application can be widely applied to the terminals of different characteristics, thus having a good compatibility.

In order to solve the above-mentioned problem, the following solution is adopted by the present disclosure.

A method for managing and controlling a wired terminal includes:
an access server is set to perform network address translation between a Machine-to-Machine (M2M) wired terminal and an M2M platform, wherein the access server translates a public address using which the M2M wired terminal is registered with the M2M platform to an inner address, and allocates the inner address to the M2M wired terminal for continuous occupation; and
the M2M platform performs management and control operation on the M2M wired terminal which occupies the inner address according to the registered public address of the M2M wired terminal, wherein the public address is translated to the inner address via the access server.

In an embodiment of the present disclosure, the management and control operation may include: the M2M platform sends a wake-up packet to an offline M2M wired terminal via the access server, so as to control the offline M2M wired terminal to log in.

In an embodiment of the present disclosure, the management and control operation may include: the M2M platform receives a non-logging-in non-registration packet sent by an offline M2M wired terminal via the access server, verifies the offline M2M wired terminal, and generates and saves logging-in success information of the offline M2M wired terminal when the offline M2M wired terminal passed the verification, wherein the M2M wired terminal may meet their application requirements only by supporting some simple M2M protocols.

In an embodiment of the present disclosure, the public address may include a public IP address and a port, wherein a plurality of M2M wired terminals may use one common public IP address, and wherein different M2M wired terminals may be distinguished according to different ports.

In an embodiment of the present disclosure, the M2M wired terminal may be accessed to the access server in one of the following access ways: an access way of point-to-point protocol over Ethernet, an access way of point-to-point protocol on ATM, an access way of point-to-point protocol over Ethernet on ATM, and an access way of dynamic host configuration protocol.

The present disclosure also provides a system for managing and controlling a wired terminal, which includes an access server and an M2M platform, wherein
the access server is configured to perform network address translation between an M2M wired terminal and the M2M platform, wherein the access server translates a public address using which the M2M wired terminal is registered with the M2M platform to an inner address, and allocates the inner address to the M2M wired terminal for continuous occupation, and
the M2M platform is configured to perform management and control operation on the M2M wired terminal which occupies the inner address according to the registered public address of the M2M wired terminal, wherein the public address is translated to the inner address via the access server.

Preferably, the M2M platform is configured to send a wake-up packet to an offline M2M wired terminal via the access server, so as to control the offline M2M wired terminal to log in.

Preferably, the M2M platform is configured to receive a non-logging-in non-registration sent by an offline M2M wired terminal via the access server, to verify the offline M2M wired terminal, and to generate and save logging-in success information of the offline M2M wired terminal when the offline M2M wired terminal passed the verification.

The present disclosure also provides an access server, which is configured to make an M2M wired terminal to be accessed to an M2M platform, and includes an address translation module and an address allocation module, wherein the address translation module is configured to translate an inner/public address to the public/inner address between the M2M wired terminal and the M2M platform, and wherein the address allocation module is configured to allocate the inner address to the M2M wired terminal for continuous occupation.

In an embodiment of the present disclosure, the public address may include a public IP address and a port, and the address allocation module may be configured to make a plurality of M2M wired terminals use one common public address and make different M2M wired terminals use different ports, and to allocate different inner addresses to different M2M wired terminals according to the different ports.

In the present disclosure, an access server is set to perform network address translation, so that an M2M wired terminal can continuously connect to the access server by using an inner address corresponding to a public address using which the M2M wired terminal is registered with the M2M platform. The M2M platform connects with the M2M wired terminal via the access server according to the registered public address of the M2M wired terminal, so as to perform management and control on the M2M wired terminal. therefore, the present disclosure can be widely applied to terminals of different characteristics widely, thus having a good compatibility.

### BRIEF DESCRIPTION OF THE DRAWINGS

Fig. 1 is a schematic diagram showing a basic networking of an M2M wired terminal according to an embodiment of the present disclosure;
Fig. 2 is a basic flow chart showing logging in of an M2M wired terminal according to an embodiment of the present disclosure;
Fig. 3 is a schematic diagram illustrating that an M2M platform wakes up an M2M wired terminal according to an embodiment of the present disclosure; and
Fig. 4 is a schematic diagram illustrating that an M2M terminal initiates to go online according to an embodiment of the present disclosure.

### DETAILED DESCRIPTION

The present disclosure will be described through specific embodiments in conjunction with the accompanying drawings in detail below.

As mentioned above, the terminals may have different characteristics. For example, a wired terminal which is not supportive of the short message will not support wake-up either; however, the wake-up has a significant meaning for management and control, and can make the offline wired terminal logging in and can help to obtain the real-time information of the wired terminal.

In this case, a solution is provided for the M2M wired terminal, in which an access server is set to perform network address translation between the M2M wired terminal and the M2M platform. When the M2M wired terminal is about to register with the M2M platform, a public address configured to the M2M wired terminal is translated to an inner address which is in turn allocated to the M2M wired terminal, and the M2M wired terminal occupies the allocated inner address continuously. The M2M platform performs management and control operation on the M2M wired terminal according to the public address configured upon the registration of the M2M wired terminal, wherein the public address is translated to the inner address via the access server. In this way, a targeted transmission mode can be performed among a whole-network platform, a low-level platform and a terminal, so as to implement management and control operation, for example the wake-up can be performed even when the terminal does not support the short message, and information such as a warning can be triggered without logging in. The access server, which is configured to make the M2M wired terminal accessed to the M2M platform, includes an address translation module and an address allocation module. The address translation module is configured to perform address translation (namely translating the inner address/public address to the public address/inner address) between the M2M wired terminal and the M2M platform. The address allocation module is configured to allocate the inner address to the M2M wired terminal so that the M2M wired terminal can occupy the inner address continuously.

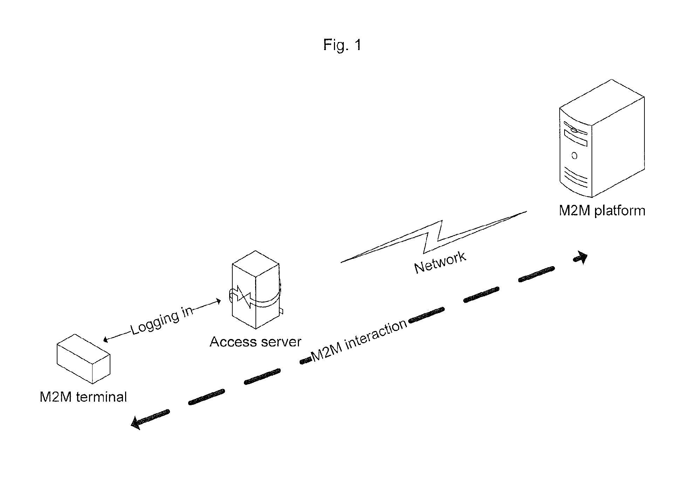

As shown in Fig. 1, in an embodiment of the present disclosure, the M2M wired terminal can be accessed to the access server by carrying out logging-in procedure, and the access server is connected to the M2M platform through the network.

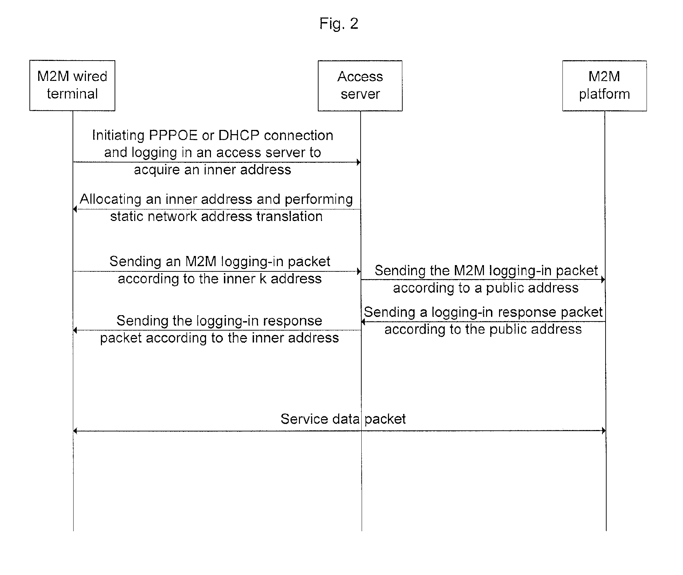

As shown in Fig. 2, the logging-in procedure of the M2M wired terminal mainly includes the following steps.

Step 201, the M2M wired terminal initiates Point-to-Point Protocol Over Ethernet (PPPOE), or Point-to-Point Protocol on ATM (PPPOA), or Dynamic Host Configuration Protocol (DHCP), or Point-to-Point Protocol Over Ethernet on ATM (PPPOEOA) connection and logs in the access server to acquire an inner address. Of course, the way listed here is only used for exemplary, other access ways may be adopted to make the M2M wired terminal accessed to the access server. The aforementioned ATM is referred to the asynchronous transfer mode, and the inner address is referred to the inner IP address.

Step 202, the access server, when finding that it is the M2M wired terminal, allocates an inner address to the M2M wired terminal, and translates the inner address to the public address through static Network Address Translation (NAT).

Different M2M wired terminals are allocated with different inner addresses, but these inner addresses are corresponding to one public address.

Step 203, the M2M wired terminal sends an M2M logging-in packet to the access server according to the allocated inner address.

Step 204, the access server sends the M2M logging-in packet to the M2M platform according to the public address.

Step 205, the M2M platform sends a logging-in response packet to the access server according to the public address.

Step 206, the access sever sends the logging-in response packet to the M2M wired terminal according to the inner address.

After logging in successfully, the M2M wired terminal can perform service data packet interaction with the M2M platform.

When whole-network platform registration is performed, an option can be added to configure a public IP address and a port for the M2M wired terminal based on the Transfer Control Protocol (TCP) or the Use Datagram Protocol (UDP). Once the M2M wired terminal is registered, one fixed Public IP address and Public Port (PublicIP, PublicPort) are used. If there is a need to change the PublicIP and the PublicPort, then a whole-network platform administrator is informed to change them, or the M2M wired terminal changes its card to execute another registration so as to change the PublicIP and the PublicPort.

When the mapping relationship between the inner address and the public address of the M2M wired terminal is configured on the access server, each M2M wired terminal is allocated with a respective inner IP address (InnerIP), **Error! Hyperlink reference not valid. Error! Hyperlink reference not valid.** what type of access way (such as the PPPOE, the DHCP and the like) is adopted by the M2M wired terminal. However, all M2M wired terminals use one common Public IP address (i.e. the PublicIP for all M2M wired terminals is same). Each M2M wired terminal sends packets through its fixed TCP port or UDP port (the PublicPort of the M2M wired terminal is fixed and different from any one of the PublicPorts of other M2M wired terminals), namely, M2M wired terminals use one common PublicIP and distinguish different inner IP addresses according to different ports. The M2M wired terminal, once started up, will not disconnect from the access server, namely, the M2M wired terminal will not be released, or in other words, it will occupy the inner IP address (InnerIP) allocated by the access server continually.

When the registration information of the M2M wired terminal is input into the M2M platform, it is the PublicIP and PublicPort is input. When registering, the M2M wired terminal dials to the access server, and the access sever allocates an InnerIP for the M2M wired terminal, after the M2M wired terminal completes the dial to the access server and is online, the M2M wired terminal sends an M2M logging-in packet to the access server.

The access server performs network address translation for the M2M logging-in packet sent by the M2M wired terminal, translating the inner address to the public address, namely, InnerIP -> (PublicIP, PublicPort). All the M2M terminals use one common PublicIP, and different M2M wired terminals are distinguished by different ports. Afterward, the M2M logging-in packet is sent to the M2M platform.

After receiving the M2M logging-in packet, the M2M platform performs M2M-protocol-related processing, and then makes a response to the access server. After receiving a logging-in response packet, the access server performs network address translation when determining that the destination address is the M2M wired terminal, translating the public address to the inner address (namely, (PublicIP, PublicPort) -> InnerIP), and then sends the M2M response packet to the M2M wired terminal. After receiving the M2M response packet, the M2M wired terminal performs related service processing.

The NAT may be performed in the above-mentioned port manner. The address allocation module of the access server may make a plurality of M2M wired terminals use one common PublicIP and make different M2M wired terminals use different ports, and allocate different InnerIPs to these M2M wired terminals according to the different ports. The NAT may be performed in the following manner: the M2M platform records the PublicIP uses by the M2M wired terminal, sends a packet to the access server according to the PublicIP; after receiving the packet, the access server performs Deep Packet Inspection (DPI) to find an M2M wired terminal numbering in the packet, and then finds a M2M wired terminal corresponding to the numbering. That is to say, the access server only needs to translate the PublicIP to the InnerIP between the M2M platform and the M2M wired terminal.

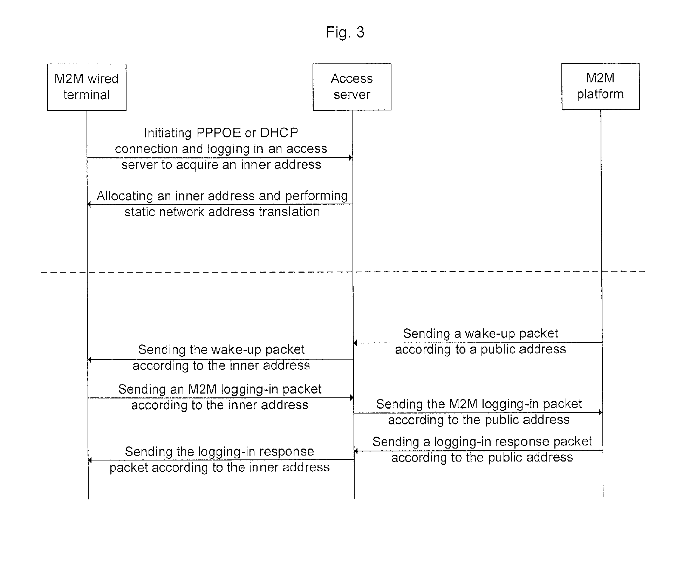

As shown in Fig. 3, the main process of waking up the M2M wired terminal by the M2M platform includes the following steps.

Step 301, the M2M wired terminal initiates a PPPOE, or PPPOA, or DHCP, or PPPOEOA connection and logs in the access server to acquire an inner address.

Step 302, the access server, when finding that it is the M2M wired terminal, allocates an inner address to the M2M wired terminal, and translates the inner address to the public address through the static network address translation.

Different M2M wired terminals are allocated with different inner addresses, but these inner addresses are corresponding to one public address.

Step 303, the M2M platform sends a wake-up packet to the access server according to the public address.

Step 304, the access server sends the wake-up packet to the M2M wired terminal according to the inner address.

Step 305, the M2M wired terminal sends an M2M logging-in packet to the access server according to the allocated inner address.

Step 306, the access server sends the M2M logging-in packet to the M2M platform according to the public address.

Step 307, the M2M platform sends a logging-in response packet to the access server according to the public address.

Step 308, the access server sends the logging-in packet to the access server according to the inner address.

The PublicIP and PublicPort of the M2M wired terminal are visible to the M2M platform. Therefore, the M2M platform sends the wake-up packet according to the PublicIP and PublicPort which are input upon registration of the M2M wired terminal. After receiving the wake-up packet, the access server sends the wake-up packet to the corresponding M2M wired terminal after translating the PublicIP to the InnerIP. After receiving the wake-up packet, the M2M wired terminal is able to send the M2M logging-in packet to start online-process.

When the M2M wired terminal is about to get off line and exit from the M2M platform, the M2M wired terminal is not disconnected from the access server. For the offline terminal, only the location of the wireless terminal can be found by using the short-message way traditionally, but the location of the wired terminal can not be found. however, in the embodiments of the present disclosure, the M2M platform can find the offline M2M wired terminal through cooperation with the access server, so ast to wake up the M2M wired terminal. The wake-up packet may be sent to the access server via the PublicIP and the PublicPort, the access server forwards the wake-up packet to the M2M wired terminal according to the PublicIP and the PublicPort. When the M2M wired terminal receives the wake-up packet and finds the packet is used for waking up the M2M wired terminal itself, the M2M wired terminal initiates the logging-in process. No short message is sent in the whole process.

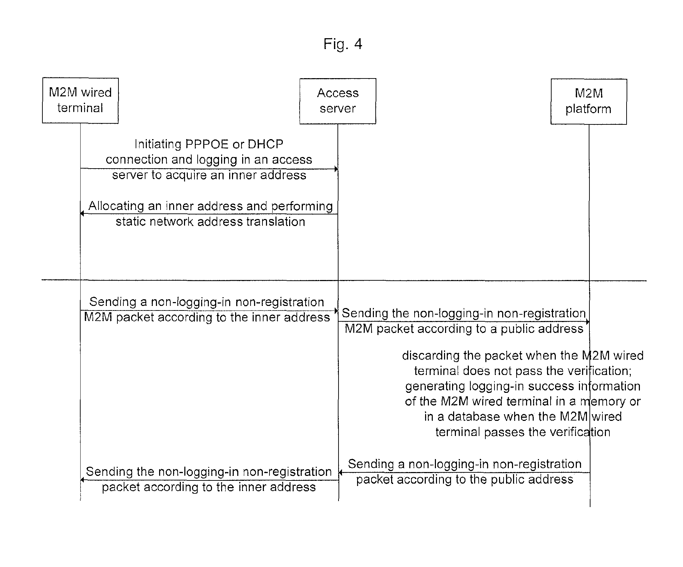

As shown in Fig. 4, the main process for the M2M wired terminal to initiate to go online includes the following steps.

Step 401, the M2M wired terminal initiates a PPPOE, or PPPOA, or DHCP, or PPPOEOA connection and logs in the access server to acquire an address.

Step 402, the access server, when finding that it is the M2M wired terminal, allocates an inner address to the M2M wired terminal, and translates the inner address to the public address through the static network address translation.

Different M2M wired terminals are allocated with different inner addresses, but these inner addresses are corresponding to one public address.

Step 403, the M2M wired terminal sends a non-logging-in non-registration M2M packet according to the allocated inner address.

Step 404, the access server sends the non-logging-in non-registration packet to the M2M platform according to the public address.

Step 405, the M2M platform verifies the M2M wired terminal; if the M2M wired terminal does not pass the verification, then the received non-logging-in non-registration packet is discarded; if the M2M wired terminal passes the verification, then logging-in success information of the M2M wired terminal is generated in the memory or in the database. Step 406, the M2M platform returns a non-logging-in non-registration packet to the access server according to the public address.

Step 407, the access server returns the non-logging-in non-registration packet to the M2M wired terminal according to the inner address.

The process of initiating to go online is also suitable for an M2M wireless terminal.

Those M2M terminals, which can meet their application requirements only by supporting a few packets in a simple M2M protocol, are defined as special terminals by the M2M platform. The special terminals may be specified when the administrator inputs their numbering. The special terminal may send a packet to the M2M platform without logging in or without maintaining heartbeat after logging in. After receiving the packet, the M2M platform determines that the terminal is offline and the terminal is a special terminal, then the M2M platform verifies whether the terminal is valid. If the terminal passed the verification, the M2M platform generates logging-in success information in a memory or in a database. Therefore, the terminal has logged in successfully without sending a logging-in packet. Then, a service logic treatment is performed on the packet reported by the terminal, and the reported packet is recorded in the platform or forwarded to the application according to the specific service. For an ordinary terminal, the service logic treatment is performed only after the logging-in of the terminal. However, for a special terminal, even if it offline, a packet reported by the special terminal can be sent to the M2M platform even when the packet is a non-registration packet or a non-logging-in packet, and the M2M platform can perform service logic treatment on the reported packet.

The special terminal may support direct initiation of going online, and thus can directly report a warning (or a related event, such as a direct protocol of the terminal or the application), so that the time for treating real-time information can be significantly reduced. Such terminal can be classified to two following kinds: one supporting registration and logging-in, in which registration and logging-in are necessary; and the other not supporting the registration and logging-in, in which it is necessary for the administrator to manually configure terminal information and input information concerning registration and logging-in into the database. The following will taking the Wireless Machine to Machine Protocol (WMMP) which is a protocol between a standard terminal and the M2M platform, and the telecommunication M2M protocol as examples. In the case of the WMMP, the platform performs verification via validating the HASH abstract of the MD5 (the TIMESTAMP is 0 since the terminal is not logged in). If the terminal fails to pass the verification, then the packet from the terminal is discarded; if the terminal passes the verification, then logging-in success information of the terminal is generated on the platform. In the case of the telecommunication M2M protocol, for the ordinary terminal, the verification is performed on the terminal numbering and IP address; while for the special terminal, the verification is performed on the HASH abstract. If the HASH abstract is valid, then the logging-in success information of the terminal is generated on the platform. In this way, the terminal can initiate an emergency-warning notification without executing the logging-in process. Therefore, for the special terminals, they can support simpler M2M protocols and can carry out services without supporting the while service process. The threshold for the M2M terminal is lowered, so that more terminals can be accessed to the platform to conduct relative service.

The present disclosure relates to the field of M2M. The M2M platform can perform the management and control operation on the M2M wired terminal through cooperation with the access server. For example, the wake-up operation can be performed on the terminal which does not support the short message, making the wake-up more rapid and more stable, and reducing the cost of the terminal because the support items of the terminal is reduced. Meanwhile, some terminal service applications which are caused by the time delay of the short message and which need to be responded in time are excluded, and the requirements on the characteristics of the terminal are reduced. A greater compatibility is provided for the terminal according to the deployment of the M2M network, so that the cost of the terminal is reduced, and the process of reporting data is simplified. The present application can support the wired terminal more satisfactorily, can conduct the advantageous services for the wired terminal more appropriately, and can lower the requirements on the terminal and the protocol, so as to focus the terminal on the applications, making the terminal has a good marketing prospects.

All those described above are detail descriptions of the present disclosure in conjunction with the specific embodiments, and do not mean that the specific embodiments are limited to therein. Those skilled in the art can make several simple deductions or replacements without departing from the principle of the present disclosure. However, these deductions or replacements belong to the scope of protection of the present disclosure.

## Claims

1. A method for managing and controlling a wired terminal, comprising:
setting an access server to perform network address translation between a Machine-to-Machine (M2M) wired terminal and an M2M platform, wherein the access server translates a public address using which the M2M wired terminal is registered with the M2M platform to an inner address, and allocates the inner address to the M2M wired terminal for continuous occupation; and
performing, by the M2M platform, management and control operation on the M2M wired terminal which occupies the inner address according to the registered public address of the M2M wired terminal, wherein the public address is translated to the inner address via the access server.

2. The method according to claim 1, wherein the management and control operation comprises: sending, by the M2M platform, a wake-up packet to an offline M2M wired terminal via the access server, so as to control the offline M2M wired terminal to log in.

3. The method according to claim 1, wherein the management and control operation comprises:
receiving, by the M2M platform, a non-logging-in non-registration packet sent by an offline M2M wired terminal via the access server,
verifying, by the M2M platform, the offline M2M wired terminal, and
generating and saving, by the M2M platform, logging-in success information of the offline M2M wired terminal when the offline M2M wired terminal passed the verification.

4. The method according to claim 1, wherein the public address comprises a public IP address and a port, wherein a plurality of M2M wired terminals use one common public IP address, and wherein different M2M wired terminals are distinguished according to different ports.

5. The method according to any one of claims 1-4, wherein the M2M wired terminal is accessed to the access server in one of the following access ways: an access way of point-to-point protocol over Ethernet, an access way of point-to-point protocol on ATM , an access way of point-to-point protocol over Ethernet on ATM, and an access way of dynamic host configuration protocol.

6. A system for managing and controlling a wired terminal, comprising an access server and a Machine-to-Machine (M2M) platform, wherein
the access server is configured to perform network address translation between an M2M wired terminal and the M2M platform, wherein the access server translates a public address using which the M2M wired terminal is registered with the M2M platform to an inner address, and allocates the inner address to the M2M wired terminal for continuous occupation, and
the M2M platform is configured to perform management and control operation on the M2M wired terminal which occupies the inner address according to the registered public address of the M2M wired terminal, wherein the public address is translated to the inner address via the access server.

7. The system according to claim 6, wherein the M2M platform is further configured to send a wake-up packet to an offline M2M wired terminal via the access server, so as to control the offline M2M wired terminal to log in.

8. The system according to claim 6, wherein the M2M platform is further configured to receive a non-logging-in non-registration sent by an offline M2M wired terminal via the access server, to verify the offline M2M wired terminal, and to generate and save logging-in success information of the offline M2M wired terminal when the offline M2M wired terminal passed the verification.

9. The system according to claim 8, wherein the public address comprises a public IP address and a port, wherein a plurality of M2M wired terminals use one common public IP address, and wherein different M2M wired terminals are distinguished according to different ports.

10. The system according to any one of the claims 6-9, wherein the M2M wired terminal is accessed to the access server in one of the following access ways: an access way of point-to-point protocol over Ethernet, an access way of point-to-point protocol on ATM , an access way of point-to-point protocol over Ethernet on ATM, and an access way of dynamic host configuration protocol.

11. An access server, being configured to make a Machine-to-Machine (M2M) wired terminal to be accessed to an M2M platform, and comprising an address translation module and an address allocation module,
wherein the address translation module is configured to translate an inner/public address to the public/inner address between the M2M wired terminal and the M2M platform, and wherein the address allocation module is configured to allocate the inner address to the M2M wired terminal for continuous occupation.

12. The access server according to claim 11, wherein the public address comprises a public IP address and a port, and wherein the address allocation module is further configured to make a plurality of M2M wired terminals use one common public address and make different M2M wired terminals use different ports, and to allocate different inner addresses to different M2M wired terminals according to the different ports.
